# FASCICULE DE BREVET EUROPEEN

(11) **EP 4 469 349 B1**
(45) Date de publication et mention de la délivrance du brevet: **02.09.2026**
(21) Numéro de dépôt: 23706658.4
(22) Date de dépôt: 19.01.2023
(51) Int. Cl.: F16H 25/22, B64D 11/06, F16C 19/16, F16C 19/18, F16C 19/54, F16C 31/04, F16C 35/067, F16H 35/10

(54) **DISPOSITIF DE TRANSMISSION D'UN MOUVEMENT**
VORRICHTUNG ZUR ÜBERTRAGUNG EINER BEWEGUNG
DEVICE FOR TRANSMITTING A MOVEMENT

(30) Priorité: 28.01.2022 FR 2200786
(43) Date de publication de la demande: 04.12.2024
(73) Titulaire: Safran Electronics & Defense, 75015 Paris (FR)
(72) Inventeur: VAN SCHAIK, Jeroen Robbert, 77550 MOISSY-CRAMAYEL (FR)
(74) Mandataire: Ernest Gutmann - Yves Plasseraud S.A.S.
(86) Numéro de dépôt international: PCT/FR2023/050076
(87) Numéro de publication internationale: WO 2023/144483

(56) Documents cités:
- WO-A1-2021/099737
- FR-A1- 3 103 859
- US-B2- 10 787 195

## Description

### Domaine technique

La présente divulgation concerne un dispositif de transmission d'un mouvement et un siège comprenant ledit dispositif.

### Technique antérieure

Dans le domaine du transport de personnes, notamment aérien, il est connu d'équiper les aéronefs, de sièges permettant de transporter des passagers en position assise. Chaque siège comprend une pluralité d'éléments, par exemple un dossier, une assise, un appui-tête, un ou plusieurs accoudoirs, etc.

Afin d'améliorer le confort des passagers, chaque siège peut être muni d'un ou plusieurs systèmes d'entrainement permettant le déplacement du siège par rapport au sol sur lequel il est installé, ou le déplacement des différents éléments du siège relativement aux autres.

Généralement, le système d'entrainement comporte un actionneur et une chaine de transmission. Les pièces mécaniques qui constituent le système d'entrainement doivent être capables de supporter des charges dites de type crash qui surviennent, par exemple, lors d'un atterrissage d'urgence de l'avion. Les pièces mécaniques doivent également être capables de supporter les charges qui surviennent lors d'un arrêt brutal du déplacement du siège ou lorsqu'un passager se laisse tomber violemment sur le siège. Toutes ces charges sont associées à un effort axial important appliqué sur les pièces du système d'entrainement qui conduit à leur usure, voire à leur rupture.

Classiquement, afin de limiter les risques d'usure et de rupture, les pièces mécaniques du système d'entrainement sont surdimensionnées. Toutefois, ce surdimensionnement augmente à la fois le coût de fabrication du système d'entrainement et le poids de l'aéronef.

Il est également connu de munir le siège d'un frein qui permet, à partir d'un phénomène de frottement entre plusieurs pièces du frein, d'arrêter l'actionneur en cas de charge à effort axial important. Cependant, à l'heure actuelle les freins utilisés sont des freins unidirectionnels, c'est-à-dire des freins qui ne peuvent amortir que les charges appliquées dans un seul sens. Cela signifie, d'une part, que les pièces du système d'entrainement ne sont pas protégées lorsque le siège rebondit pendant l'application de la charge à effort axial important. D'autre part, deux variantes du frein unidirectionnel doivent être mises en oeuvre afin que le frein soit opérationnel quel que soit le sens dans lequel il est prévu d'être installé dans le siège. Aussi, les coûts de conception et de fabrication du frein augmentent.

Les documents WO 2021/099737 A1 , US 10 787 195 et FR 3 103 859 A1 divulguent également des dispositifs de transmission d'un mouvement. De plus, le document WO 2021/099737 A1 divulgue un siège d'aéronef.

### Résumé

La présente divulgation vient améliorer la situation.

A cet effet, il est proposé un dispositif de transmission d'un mouvement, le dispositif comportant :
- une vis s'étendant selon un axe ;
- un écrou coopérant avec la vis ;
- un carter ;
- un premier organe élastique ;
- un deuxième organe élastique ;
- un premier ensemble comportant ledit écrou ;
- un second ensemble comportant ledit carter ;
- une première butée axiale solidaire axialement du premier ensemble et apte à coopérer avec une première butée axiale complémentaire du second ensemble, un premier jeu axial étant formé entre la première butée axiale et la première butée axiale complémentaire ; et
- une deuxième butée axiale solidaire axialement du premier ensemble et apte à coopérer avec une deuxième butée axiale complémentaire du second ensemble, un deuxième jeu axial étant formé entre la deuxième butée axiale et la deuxième butée axiale complémentaire ;

le premier organe élastique étant apte à être déformé indépendamment du deuxième organe élastique sous l'effet d'un premier effort axial orienté selon une première direction et exercé par le premier ensemble sur le premier organe élastique, de façon à réduire le premier jeu axial, la première butée axiale étant apte à venir en appui sur la première butée axiale complémentaire lorsque ledit premier effort axial dépasse un premier seuil,
le deuxième organe élastique étant apte à être déformé indépendamment du premier organe élastique sous l'effet d'un deuxième effort axial orienté selon une deuxième direction opposée à la première direction et exercé par le premier ensemble sur le deuxième organe élastique, de façon à réduire le deuxième jeu axial, la deuxième butée axiale étant apte à venir en appui sur la deuxième butée axiale complémentaire lorsque ledit deuxième effort axial dépasse un deuxième seuil.

Dans le présent texte, les termes « axial », « radial » et « circonférentiel » sont définis par rapport à l'axe d'étendue de la vis. En particulier, « axial » a pour sens suivant l'axe d'étendue de la vis, ou parallèle à lui, et radial a pour sens suivant tout axe transversal ou sensiblement transversal à cet axe. Par « circonférentiel » on entend autour de l'axe précité.

Dans le dispositif proposé, grâce à la déformation du premier organe élastique ou du deuxième organe élastique qui provoque l'appui du premier ensemble contre le second ensemble, les efforts axiaux sont dissipés à travers le second ensemble, notamment à travers le carter, au lieu d'à travers les autres pièces du dispositif qui sont plus sujettes à l'usure et à la fracture. Aussi les risques d'usure et fracture du dispositif sont réduits, et ce sans qu'il soit nécessaire de surdimensionner les pièces dudit dispositif.

Par ailleurs, la présence du premier organe élastique et du deuxième organe élastique aptes à être déformés indépendamment l'un de l'autre sous l'effet d'efforts axiaux orientés selon des directions opposées permet au dispositif de transmission de constituer un frein bidirectionnel capable d'amortir les efforts axiaux subis même en cas de rebond du siège et indépendamment du sens d'installation dans le siège du dispositif de transmission.

Le premier organe élastique et le deuxième organe élastique peuvent être des rondelles élastiques.

Le premier seuil et le deuxième seuil correspondent par exemple à l'effort axial maximal qui peut être appliqué sur, respectivement, le premier organe élastique et le deuxième organe élastique sans qu'ils soient déformés. De préférence, le premier seuil et le deuxième seuil sont compris entre 3000 N et 6000 N, de préférence encore entre 3325N et 5556 N. Par exemple, le premier et le deuxième seuils sont égaux à 4440 N. Tout effort axial orienté selon la première direction et exercé par le premier ensemble sur le premier organe élastique qui dépasse le premier seuil peut être associé à une charge de type crash ou à effort axial important appliquée sur le dispositif selon la première direction. De même tout effort axial orienté selon la deuxième direction et exercé par le premier ensemble sur le deuxième organe élastique qui dépasse le deuxième seuil peut être associé à une charge de type crash ou à effort axial important appliquée sur le dispositif selon la deuxième direction.

La vis, le carter et l'écrou peuvent être coaxiaux.

Le carter et l'écrou peuvent comprendre un alésage. La vis peut ainsi être logée partiellement à l'intérieur du carter et de l'écrou.

Le premier ensemble peut être configuré pour se déplacer en rotation autour de l'axe d'étendue de la vis lorsque le dispositif proposé transmet un mouvement. En cas de charge de type crash ou à effort axial important appliquée sur le dispositif, le premier ensemble peut se déplacer aussi axialement dans le sens d'application de la charge. Ce déplacement axial du premier ensemble donne lieu aux efforts axiaux, selon la première direction ou la deuxième direction, que le premier ensemble exerce sur le premier organe élastique ou sur le deuxième organe élastique.

Le second ensemble peut être configuré pour être immobile lorsque le dispositif proposé transmet un mouvement ainsi que lors de l'application des charges de type crash ou à effort axial important.

Lorsque le premier ensemble vient en appui contre le second ensemble, le déplacement axial du premier ensemble peut être bloqué. Par ailleurs, un frottement apparait entre la première butée et la première butée complémentaire, ou entre la deuxième butée et la deuxième butée complémentaire. Ce frottement peut freiner le mouvement de rotation du premier ensemble.

La vis et l'écrou forment un système vis-écrou qui est de préférence réversible. Par « réversible » on entend qu'une rotation autour de l'axe d'étendue de la vis de l'écrou provoque un déplacement axial de la vis.

L'écrou et la vis peuvent comprendre respectivement un taraudage et un filetage complémentaires et conformés pour que la rotation de l'écrou autour de l'axe de la vis entraine le déplacement axial de la vis. Le taraudage de l'écrou et le filetage de la vis peuvent coopérer directement ou indirectement entre eux.

Dans certains cas, pour que le dispositif de transmission s'active lorsque l'effort axial exercé sur le dispositif est supérieur au premier ou au deuxième seuil; la rotation de l'écrou est bloquée avec un couple suffisant. A cet effet, l'écrou peut être relié à un élément permettant son freinage. Par exemple, l'écrou peut être relié à un frein à friction ou à un moteur avec un couple de crantage élevé.

Le dispositif peut en outre comprendre un premier élément de précontrainte et un deuxième élément de précontrainte, le premier élément de précontrainte étant apte à régler un effort de précontrainte agissant sur le premier organe élastique indépendamment d'un effort de précontrainte agissant sur le deuxième organe élastique, le deuxième élément de précontrainte étant apte à régler l'effort de précontrainte agissant sur le deuxième organe élastique indépendamment de l'effort de précontrainte agissant sur le premier organe élastique.

Le premier élément de précontrainte et le deuxième élément de précontrainte permettent donc de régler indépendamment l'effort de précontrainte qui agit respectivement sur le premier organe élastique et sur le deuxième organe élastique. Ainsi, les efforts de précontrainte agissant sur les premier et deuxième organes élastiques peuvent être différents de sorte qu'ils ne s'annulent pas entre eux. Le dispositif de transmission constitue donc un frein bidirectionnel opérationnel.

Le premier élément de précontrainte et le deuxième élément de précontrainte peuvent être installés dans l'alésage du carter. Par exemple, le premier élément de précontrainte et le deuxième élément de précontrainte peuvent avoir chacun une périphérie radialement externe reliée au second ensemble et une périphérie radialement interne libre disposée en regard du premier ensemble. Un jeu radial peut ainsi être formé entre le premier ensemble et les premier et deuxième éléments de précontrainte. Ceci évite que les premier et deuxième éléments de précontrainte ne soient déplacés avec le premier ensemble en rotation autour de l'axe d'étendue de la vis.

Pour relier les premier et deux éléments de précontrainte au carter, la périphérie radialement externe de chacun des éléments de précontrainte peut comprendre un filetage complémentaire d'un taraudage respectif agencé sur le carter. Cette configuration permet par ailleurs aux premier et deuxième éléments de précontrainte de se déplacer axialement afin d'ajuster l'effort de précontrainte qui agit sur chaque organe élastique. Par exemple, le premier élément de précontrainte peut se rapprocher axialement du premier organe élastique par vissage de son filetage dans le taraudage respectif du carter de sorte à augmenter l'effort de précontrainte dans le premier organe élastique. De même, le premier élément peut s'éloigner axialement du premier organe élastique par dévissage de son filetage dans le taraudage respectif du carter de sorte à diminuer l'effort de précontrainte dans le premier organe élastique. Le même principe peut s'appliquer au deuxième élément de précontrainte pour augmenter ou diminuer l'effort de précontrainte dans le deuxième organe élastique.

On note que les déplacements axiaux des premier et deuxième éléments de précontrainte sont indépendants entre eux, ce qui permet d'appliquer un effort de précontrainte différent sur chaque organe élastique.

Il est précisé que, dans le présent texte, les termes « externe » ou « extérieur » et « interne » ou « intérieur » s'apprécient radialement.

Le dispositif peut comporter au moins un roulement comprenant une bague radialement interne disposée en regard du premier ensemble et une bague radialement externe disposée en regard du second ensemble, une périphérie radialement externe de chaque organe élastique venant en appui axialement directement ou indirectement sur la bague radialement externe dudit roulement, et une périphérie radialement interne venant en appui axialement sur l'élément de précontrainte.

L'appui axial du premier organe élastique sur la bague radialement externe de l'au moins un roulement se fait d'un côté de l'au moins un roulement opposé axialement au côté de l'au moins un roulement sur lequel se fait l'appui axial du deuxième organe élastique sur ladite bague radialement externe.

L'effort axial exercé par le premier ensemble sur chacun des organes élastiques peut traverser l'au moins un roulement. En particulier, l'effort axial peut être transmis du premier ensemble à la bague radialement interne de l'au moins un roulement, ce qui provoque un déplacement axial de la bague radialement externe selon la direction de cet effort axial. Chaque organe élastique venant en appui axialement, directement ou indirectement, sur la bague radialement externe dudit roulement, le déplacement axial de la bague radialement externe provoque la déformation de l'organe élastique sur lequel l'effort axial est exercé.

Le second ensemble peut comprendre un épaulement s'étendant radialement depuis une paroi radialement interne du carter. Le premier organe élastique peut alors être agencé d'un premier côté de l'épaulement du second ensemble et le deuxième organe élastique peut être agencé d'un second côté de l'épaulement du second ensemble opposé au premier côté.

Le premier organe élastique et le deuxième organe élastique étant agencés chacun d'un côté opposé de l'épaulement du second ensemble, il est possible d'obtenir un chemin de forces différencié pour les efforts axiaux appliqués selon la première direction et pour les efforts axiaux appliqués selon la deuxième direction.

L'épaulement du second ensemble peut être annulaire.

Un premier roulement peut être agencé entre le premier organe élastique et le premier côté de l'épaulement du second ensemble. Un deuxième roulement peut être agencé entre le deuxième organe élastique et le second côté de l'épaulement du second ensemble. La périphérie radialement externe du premier organe élastique vient alors en appui axial sur la bague radialement externe du premier roulement, la périphérie radialement externe du deuxième organe élastique venant en appui axial sur la bague radialement externe du deuxième roulement. Chaque organe élastique vient ainsi en appui sur la bague externe d'un roulement différent, ce qui accroît l'indépendance entre les efforts subis par chacun des organes élastiques.

Le premier ensemble peut comprendre un épaulement s'étendant radialement depuis une paroi radialement externe du premier ensemble, l'épaulement du premier ensemble étant disposé en vis-à-vis radial de l'épaulement du second ensemble.

L'épaulement du premier ensemble permet de mieux séparer le chemin de forces pour les efforts axiaux appliqués selon la première direction et pour les efforts axiaux appliqués selon la deuxième direction.

L'épaulement du premier ensemble peut avoir une longueur selon la direction axiale inférieure à une longueur selon ladite direction axiale de l'épaulement du second ensemble. La précharge des premier et deuxième organes élastiques est ainsi réglable indépendamment d'un côté et l'autre des épaulements du premier et second ensembles.

Un roulement peut être agencé radialement à l'intérieur de l'épaulement du second ensemble.

Le roulement peut avoir une longueur axiale sensiblement égale à une longueur axiale de l'épaulement du second ensemble. Le roulement peut être un roulement à double rangée, ce qui permet d'absorber plus de charge axiale. La sécurité en cas de charge de type crash ou de toute charge à effort axial important peut ainsi être améliorée.

Le roulement peut être maintenu en position sur l'épaulement du second ensemble à partir d'une première entretoise annulaire et une deuxième entretoise annulaire faisant saillie radialement depuis le premier ensemble et agencées axialement de part et d'autre de la bague radialement interne du roulement.

Le dispositif peut comprendre en outre un premier plateau d'appui annulaire agencé entre la bague radialement externe du roulement et la périphérie radialement externe du premier organe élastique, et un deuxième plateau d'appui annulaire agencé entre la bague radialement externe du roulement et la périphérie radialement externe du deuxième organe élastique, la périphérie radialement externe du premier organe élastique venant en appui contre le premier plateau d'appui, la périphérie radialement externe du deuxième organe élastique venant en appui contre le deuxième plateau d'appui.

Le premier plateau et le deuxième plateau peuvent être annulaires. Une demi-section axiale des premier et deuxième plateaux a de préférence une forme de L inversé.

Le premier plateau d'appui et le deuxième plateau d'appui peuvent être libres par rapport au premier ensemble et au second ensemble. Dans ce cas, les premier et deuxième plateaux d'appui peuvent être coincés axialement entre la bague radialement externe du roulement et la périphérie radialement externe, respectivement, du premier organe élastique et du deuxième organe élastique. Ainsi, ils peuvent être maintenus en position tout en étant capables de se déplacer solidairement avec la bague radialement externe du roulement, ce qui permet de déformer le premier organe élastique ou le deuxième organe élastique lorsque l'effort axial appliqué par le premier ensemble est supérieur au premier seuil ou au deuxième seuil.

Le premier plateau d'appui peut être en vis-à-vis radial de la première entretoise. Le deuxième plateau d'appui peut être en vis-à-vis radial de la deuxième entretoise.

Selon un autre aspect, il est proposé un siège pour aéronef, comportant une partie fixe destinée à être fixée à une partie fixe de l'aéronef et une partie mobile apte à être déplacée par rapport à la partie fixe, un dispositif de transmission d'un mouvement tel que décrit ci-avant étant monté entre la partie mobile et la partie fixe, l'écrou du dispositif de transmission du mouvement étant apte à être entrainé en rotation par un actionneur, la vis étant reliée à ladite partie mobile du siège, le carter étant relié à ladite partie fixe du siège.

Le dispositif de transmission d'un mouvement confère à la partie mobile du siège un mouvement qui l'amène à se déplacer par rapport à la partie fixe dudit siège. En particulier, la vis du dispositif de transmission étant reliée à la partie mobile du siège, le déplacement de cette partie mobile est solidaire du déplacement axial de la vis.

La partie fixe du siège peut être reliée directement ou indirectement à la partie fixe de l'aéronef. La partie fixe de l'aéronef correspond par exemple au sol.

Dans certains cas, les parties fixe et mobile du siège correspondent chacune à l'un des éléments du siège. Dans un exemple non limitatif, la partie mobile correspond au dossier du siège, tandis que la partie fixe du siège correspond à l'assise, qui est reliée, directement ou par l'intermédiaire des pieds, au sol de l'aéronef.

On note qu'il n'est pas exclu que l'élément du siège qui constitue la partie fixe de celui-ci dans une situation donnée, constitue la partie mobile du siège dans une autre situation. Par exemple, l'assise qui est reliée au sol par l'intermédiaire des pieds pourrait se déplacer relativement aux pieds, les pieds étant compris dans la partie fixe du siège, et l'assise faisant partie de la partie mobile du siège. De même, l'élément du siège qui constitue la partie mobile de celui-ci dans une situation donnée peut constituer la partie fixe du siège dans une autre situation.

Selon un autre exemple non limitatif, la partie fixe du siège comprend par exemple une glissière fixée au sol de l'aéronef. La partie mobile du siège comprend par exemple plusieurs pieds reliés à la glissière de manière à pouvoir coulisser le long de celle-ci.

### Brève description des dessins

D'autres caractéristiques, détails et avantages apparaîtront à la lecture de la description détaillée ci-après, et à l'analyse des dessins annexés, sur lesquels :
**Fig. 1**

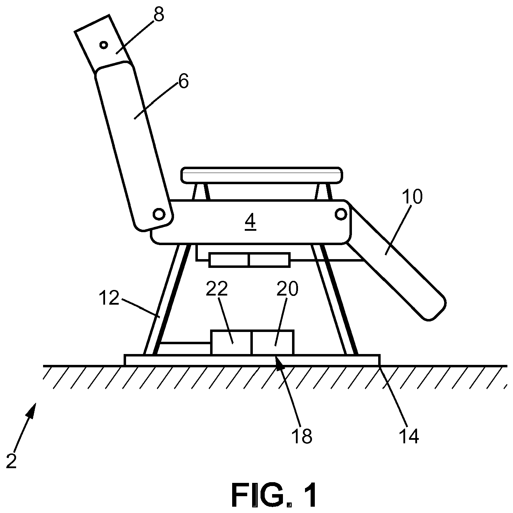

   [Fig. 1] montre une vue latérale schématique d'un siège pour aéronef muni d'un dispositif de transmission d'un mouvement selon l'invention.
**Fig. 2**

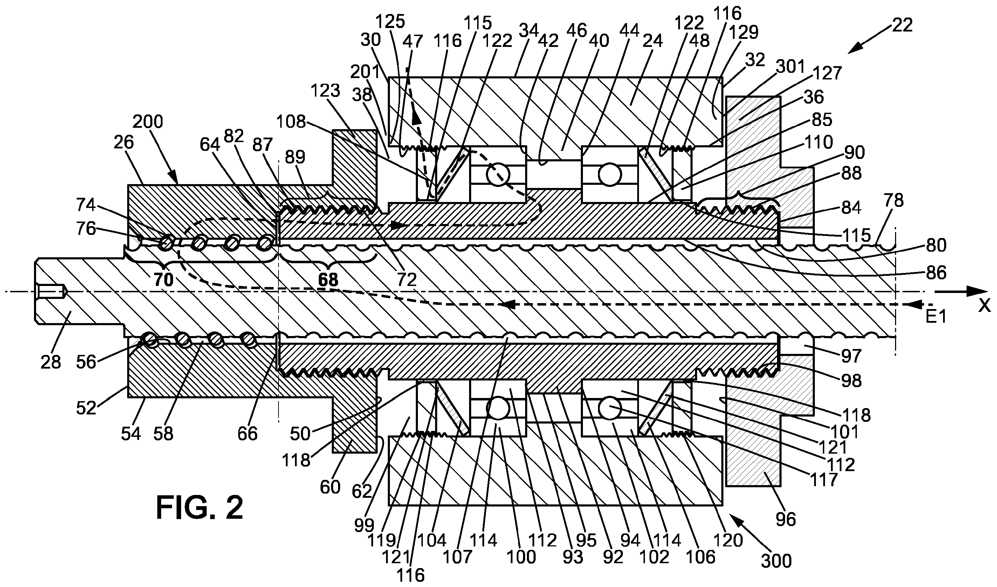

   [Fig. 2] montre une vue schématique en coupe axiale du dispositif de transmission d'un mouvement du siège de la figure 1 selon une forme de réalisation de l'invention, et un chemin des forces suivies par ce dispositif de transmission lorsqu'un effort axial selon une première direction est appliqué sur le dispositif de transmission.
**Fig. 3**

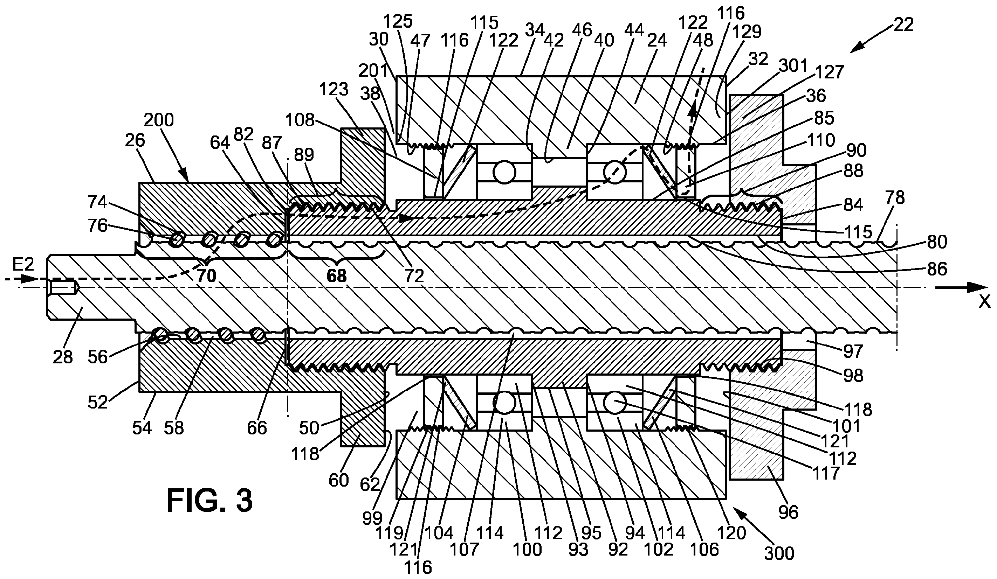

   [Fig. 3] montre la même vue du dispositif de transmission d'un mouvement de la figure 2, et un chemin de forces suivies par ce dispositif de transmission lorsqu'un effort axial selon une deuxième direction opposée à la première direction est appliqué sur le dispositif de transmission.
**Fig. 4**

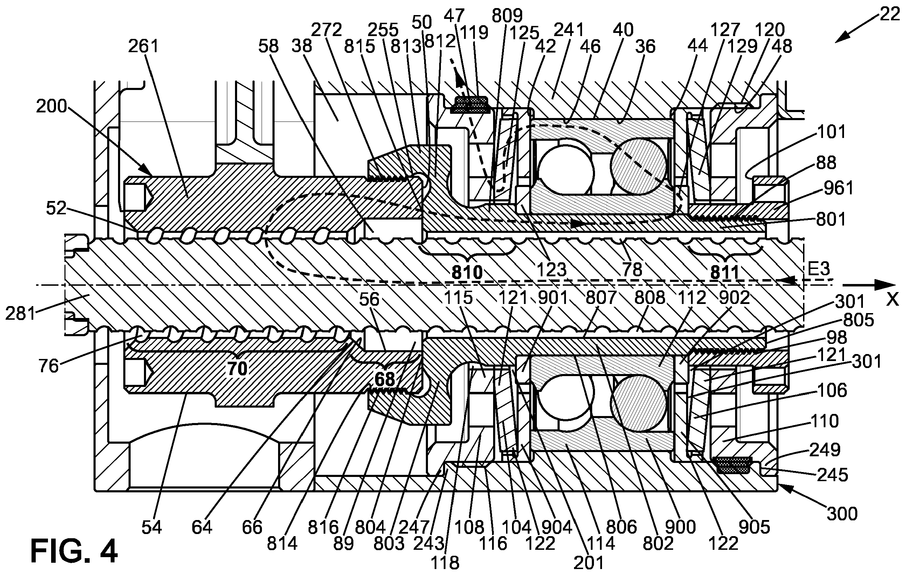

   [Fig. 4] montre une vue schématique en coupe axiale du dispositif de transmission du mouvement généré par l'actionneur du siège de la figure 1 selon une autre forme de réalisation de l'invention, et un chemin des forces suivies par ce dispositif de transmission lorsqu'un effort axial selon une première direction est appliqué sur le dispositif de transmission.
**Fig. 5**

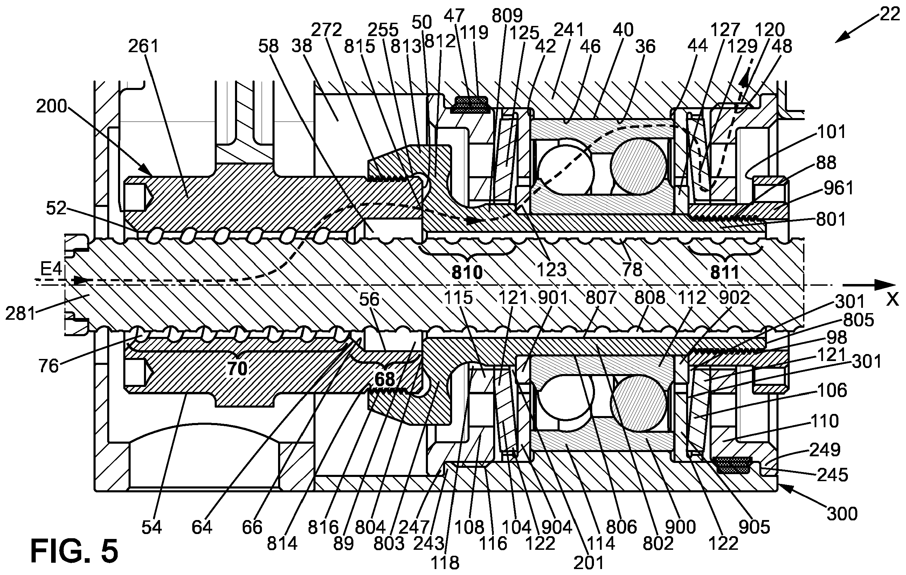

   [Fig. 5] montre la même vue du dispositif de transmission d'un mouvement de la figure 4, et un chemin de forces suivies par ce dispositif de transmission lorsqu'un effort axial selon une deuxième direction opposée à la première direction est appliqué sur le dispositif de transmission.

### Description des modes de réalisation

La figure 1 montre un siège 2, notamment pour aéronef. Le siège 2 comprend une assise 4, un dossier 6 et un appui-tête 8. Le siège 2 peut en outre comprendre un repose-jambes 10.

Le siège 2 est destiné à être relié à une partie fixe de l'aéronef, notamment au sol. A cet effet, le siège 2 comprend des pieds 12 et une glissière 14. La glissière 14 comprend par exemple deux rails fixés au sol, chaque pied 12 étant monté sur l'un des rails de manière à pouvoir coulisser le long du rail respectif. Le siège 2 est ainsi apte à se déplacer en avant ou en arrière.

Le siège 2 comporte un système d'entrainement 18 électrique. Le système 18 peut être dédié au déplacement de l'un des éléments (assise 4, dossier 6, appui-tête 8, repose-jambes 10, etc) du siège 2 par rapport aux autres. Alternativement, le système 18 est dédié au déplacement du siège 2 dans la glissière 14.

Dans ce qui suit, l'élément du siège 2 qui est déplacé est appelé « partie mobile », tandis que les éléments par rapport auxquels il se déplace sont appelés « partie fixe ».

Le système d'entrainement 18 comprend par exemple un actionneur 20 apte à générer un mouvement, notamment de rotation, et un dispositif de transmission 22 d'un mouvement. En particulier, le dispositif de transmission est configuré pour transformer le mouvement généré par l'actionneur en un mouvement adapté pour déplacer la partie mobile par rapport à la partie fixe du siège.

Le système d'entrainement 18 comprend en outre des pièces mécaniques (non représentées), telles que des pignonneries ou des bielles, adaptées pour transmettre le mouvement généré par l'actionneur 20 au dispositif de transmission 22. Plus précisément, ces pièces mécaniques relient l'actionneur 20 au dispositif de transmission 22. De telles pièces mécaniques font de préférence partie d'un train réducteur, par exemple un train réducteur multi-étages. Le train réducteur permet de réduire la vitesse du mouvement généré par l'actionneur 20 avant d'être transmis au dispositif de transmission 22. La réduction de la vitesse du mouvement généré par l'actionneur 20 est liée à une augmentation du couple de sortie de l'actionneur 20.

Maintenant le dispositif de transmission 22 sera décrit en référence aux figures 2 à 5.

Dans une première forme de réalisation, illustrée sur les figures 2 et 3, le dispositif 22 comprend un carter 24, un écrou 26 et une vis 28 qui s'étend selon un axe X.

Le carter 24 a une forme générale cylindrique s'étendant axialement entre une première extrémité 30 et une deuxième extrémité 32. Le carter 24 comprend une paroi radialement externe 34 et une paroi radialement interne 36. La paroi radialement interne 36 délimite un alésage 38 qui traverse le carter 24 axialement entre les première et deuxième extrémités 30, 32. L'alésage 38 a de préférence une section transversale sensiblement circulaire sur toute sa longueur. Dans le présent texte, par « transversal » on entend inclus dans un plan sensiblement normal à l'axe X.

Le carter 24 comprend un épaulement 40, de préférence annulaire, s'étendant radialement depuis la paroi radialement interne 36. En particulier, l'épaulement 40 comprend une première face 42 et une deuxième face 44 sensiblement parallèles et qui font saillie radialement dans l'alésage 38. L'épaulement 40 comprend en outre une face de connexion 46 s'étendant axialement dans l'alésage 38. La face de connexion 46 relie les première et deuxième faces 42, 44 de l'épaulement 40.

Une distance selon la direction axiale entre les première et deuxième faces 42, 44 définit une largeur de l'épaulement 40.

La paroi radialement interne 36 du carter 24 est avantageusement munie d'un premier taraudage 47 et d'un deuxième taraudage 48. Le premier taraudage 47 est disposé entre la première extrémité 30 du carter 24 et la première face 42 de l'épaulement 40. Le deuxième taraudage 48 est disposé entre la deuxième extrémité 32 du carter 24 et la deuxième face 44 de l'épaulement 40. Avantageusement, les taraudages 47, 48 sont identiques, sans que ceci ne soit limitatif.

Comme il va être détaillé, le premier taraudage 47 permet de relier un premier élément de précontrainte 108 au carter 24, tandis que le deuxième taraudage 48 permet de relier un deuxième élément de précontrainte 110 au carter 24.

La paroi radialement interne 36 peut en outre comprendre une première butée axiale et une deuxième butée axiale, non représentées sur les figures 2 et 3. Les première et deuxième butées axiales de la paroi 36 bloquent un déplacement axial, respectivement, du premier élément de précontrainte 108 et du deuxième élément de précontrainte 110, comme cela sera décrit ultérieurement.

Comme il va être également détaillé, le carter 24 est configuré pour être immobile dans le dispositif 22. Avantageusement, lorsque le dispositif 22 est installé dans le siège 2, le carter 24 est relié à une partie fixe du siège 2.

L'écrou 26 a une forme générale cylindrique s'étendant axialement entre une première extrémité 50 et une deuxième extrémité 52. L'écrou 26 comprend une paroi radialement externe 54 et une paroi radialement interne 56.

La paroi radialement externe 54 comprend une collerette annulaire 60 faisant saillie radialement vers l'extérieur. Une face 62 de la collerette 60 est alignée axialement avec la première extrémité 50 de l'écrou 26. Avantageusement, un diamètre de la collerette 60 est supérieur à un diamètre de l'alésage 38 du carter 24.

La paroi radialement interne 56 délimite un alésage 58 traversant axialement l'écrou 26 entre les première et deuxième extrémités 50, 52. De préférence, une section transversale de l'alésage 58 est sensiblement circulaire sur toute sa longueur.

Un épaulement 64, de préférence annulaire, est prévu sur la paroi radialement interne 56. L'épaulement 64 comprend une face 66 s'étendant radialement dans l'alésage 58. Un vecteur normal à la face 66 est orienté vers la première extrémité 50 de l'écrou 26.

L'épaulement 64 divise la paroi radialement interne 56 en une première zone 68 et une deuxième zone 70. La première zone 68 s'étend entre l'épaulement 64 et la première extrémité 50 de l'écrou 26. La deuxième zone 70 s'étend entre l'épaulement 64 et la deuxième extrémité 52 de l'écrou 26. Comme il ressort des figures 2 et 3, le diamètre de l'alésage 58 le long de la première zone 68 est supérieur au diamètre de l'alésage 58 le long de la deuxième zone 70, mais inférieur au diamètre de l'alésage 38 du carter.

La première zone 68 de la paroi radialement interne 56 comprend un taraudage 72. Le taraudage 72 permet de relier l'écrou 26 à un manchon 80 qui sera décrit par la suite. Avantageusement, le taraudage 72 est conçu pour que l'écrou 26 et le manchon 80 se déplacent solidairement lorsqu'ils sont reliés, comme il va être détaillé.

La deuxième zone 70 de la paroi radialement interne 56 comprend un taraudage 74 destiné à coopérer directement ou indirectement avec la vis 28. Sur les figures 2 et 3, le taraudage 74 coopère avec la vis 28 par l'intermédiaire d'une pluralité de billes 76, mais il pourrait coopérer avec la vis 28 par l'intermédiaire d'une pluralité de rouleaux, entre autres. Alternativement, le taraudage 74 peut être de type trapézoïdal et coopérer directement avec la vis 28. Le taraudage 74 est conçu pour provoquer un déplacement axial de la vis 28 lorsque l'écrou 26 tourne autour de l'axe X.

Avantageusement, l'écrou 26 est relié au train réducteur du système d'entrainement 18. Le mouvement de rotation généré par l'actionneur 20 est ainsi transmis, avec une vitesse réduite et un couple augmenté, à l'écrou 26. L'écrou 26 est ainsi entrainé en rotation autour de l'axe X.

Comme visible sur les figures 2 et 3, la vis 28 est partiellement logée dans l'alésage 38 du carter et dans l'alésage 58 de l'écrou 26.

Une surface radialement externe de la vis 28 comprend un filetage 78 conformé pour coopérer directement ou indirectement avec le taraudage 74 de l'écrou 26 tel que décrit ci-avant. La vis 28 peut donc être une vis à billes, une vis à rouleaux ou une vis trapézoïdale, entre autres. Ceci permet que la vis 28 et l'écrou 26 coopèrent de sorte que la rotation de l'écrou 26 autour de l'axe X provoque le déplacement axial de la vis 28.

Lorsque le dispositif 22 est installé dans le siège 2, la vis 28 est de préférence reliée, directement ou indirectement, à la partie mobile du siège 2. La partie mobile se déplace ainsi relativement à la partie fixe du siège 2 solidairement avec la vis 28. Lorsque la partie mobile correspond aux pieds 12, et la partie fixe du siège 2 correspond à la glissière 12, le dispositif 22 permet de déplacer le siège 2 en avant et en arrière.

Comme indiqué précédemment, le dispositif 22 comprend en outre un manchon 80. Le manchon 80 a une forme sensiblement cylindrique s'étendant axialement entre une première extrémité 82 et une deuxième extrémité 84. Le manchon 80 comprend une paroi radialement externe 85 et une paroi radialement interne 86.

Le paroi radialement externe 85 du manchon 80 comprend un premier filetage 87 et un deuxième filetage 88.

Le premier filetage 87 s'étend axialement sur une première partie d'extrémité 89 du manchon 80 qui comprend la première extrémité 82. Le premier filetage 87 est complémentaire du taraudage 72 de l'écrou 26, ce qui permet de relier l'écrou 26 et le manchon 80.

Le deuxième filetage 88 s'étend axialement sur une deuxième partie d'extrémité 90 du manchon 80 qui comprend la deuxième extrémité 84. Le deuxième filetage 88 permet de relier le manchon 80 à un écrou de fermeture 96 qui sera décrit ci-après.

La paroi radialement externe 85 comprend en outre un épaulement 92, de préférence annulaire, s'étendant radialement depuis la paroi radialement externe 85. En particulier, l'épaulement 92 comprend une première face 93 et une deuxième face 94 sensiblement parallèles et qui font saillie radialement vers l'extérieur du manchon 80. L'épaulement 92 comprend en outre une face de connexion 95 s'étendant axialement et reliant les première et deuxième faces 93, 94 de l'épaulement 92.

Une distance selon la direction axiale entre les première et deuxième faces 93, 94 définit une largeur de l'épaulement 92. De préférence, la largeur de l'épaulement 92 est inférieure à la largeur de l'épaulement 40 du carter 24.

La paroi radialement interne 86 délimite un alésage 107 traversant le manchon 80 entre les première et deuxième extrémités 82, 84. Avantageusement, l'alésage 107 a une section transversale sensiblement circulaire. Comme visible sur les figures 2 et 3, un diamètre de l'alésage 107 est de préférence sensiblement égal au diamètre de l'alésage 58 de l'écrou 26 le long de la deuxième zone 70 de la paroi radialement interne 56. Ceci permet que lorsque l'écrou 26 et le manchon 80 sont reliés, les alésages 58 et 107 soient dans le prolongement l'un de l'autre.

L'écrou de fermeture 96 a une forme générale annulaire comprenant un trou central 97. Un diamètre du trou central 97 est de préférence supérieur ou égal au diamètre de l'alésage 107 du manchon 80. L'écrou de fermeture 97 comprend une face de fermeture 101 orientée axialement vers l'écrou 26. Avantageusement, un diamètre radialement externe de la face de fermeture 101 est supérieur au diamètre de l'alésage 38 du carter 24.

Un bord radialement interne de l'écrou de fermeture 96 comprend un taraudage 98. Le taraudage 98 est complémentaire du deuxième filetage 88 du manchon 80, ce qui permet de relier l'écrou de fermeture 96 et le manchon 80. Le taraudage 98 et le filetage 88 sont conçus pour que le manchon 80 et l'écrou de fermeture 96 se déplacent solidairement lorsqu'ils sont reliés. Le manchon 80 se déplaçant solidairement avec l'écrou 26, l'écrou de fermeture 96 se déplace également solidairement avec l'écrou 26.

Comme visible sur les figures 2 et 3, le manchon 80 est conformé pour s'étendre axialement à l'intérieur de l'alésage 38 du carter 24. En particulier, le manchon 80 est agencé radialement entre la vis 28 et la paroi radialement interne 36 du carter 24. Dans cette position, le carter 24 et le manchon 80 sont coaxiaux. De manière avantageuse, l'épaulement 92 du manchon et l'épaulement 40 du carter sont disposés en vis-à-vis radial lorsque le manchon 80 est installé à l'intérieur de l'alésage 38 du carter.

Une cavité circonférentielle 99 se forme entre la paroi radialement externe du manchon 80 et la paroi radialement interne du carter 24. La cavité 99 a une épaisseur sensiblement constante présentant un rétrécissement dans la zone dans laquelle les épaulements 40, 92 se font face radialement.

Le dispositif de transmission 22 comprend en outre un premier roulement 100, un deuxième roulement 102, un premier organe élastique 104, un deuxième organe élastique 106, et les premier et deuxième éléments de précontrainte 108, 110. Les roulements 100, 102, les organes élastiques 104, 106 et les éléments de précontrainte 108, 110 sont agencés dans la cavité 99.

Les premier et deuxième roulements 100, 102 comprennent chacun une bague radialement interne 112 et une bague radialement externe 114. Une pluralité d'éléments roulants 117 sont agencés circonférentiellement entre les bagues 112 et 114. Sur les figures 2 et 3, les roulements 100, 102 comprennent une seule rangée circonférentielle d'éléments roulants 117.

La bague radialement interne 112 est disposée en vis-à-vis radial du manchon 80, tandis que la bague radialement externe 114 est disposée en vis-à-vis radial du carter 24. Plus précisément, la bague radialement interne 112 est au contact de la paroi radialement externe 85 du manchon 80 et la bague radialement externe 114 est au contact de la paroi radialement interne 36 du carter 24.

La bague radialement interne 112 de chaque roulement 100, 102 est disposée axialement en regard de l'une des faces 93, 94 de l'épaulement 92 du manchon 80. La bague radialement externe 114 de chaque roulement 100, 102 est disposée axialement en regard de l'une des faces 42, 44 de l'épaulement 40 du carter 24.

Comme visible sur les figures 2 et 3, les premier et deuxième roulements 100, 102 sont chacun disposés d'un côté opposé de l'épaulement 40 du carter 24 et de l'épaulement 92 du manchon 80. Avantageusement, les bagues radialement externes 114 des roulements 100, 102 sont au contact de l'une des faces 42, 44 de l'épaulement 40. Sur les figures 2 et 3, la bague radialement externe 114 du premier roulement 100 est au contact de la face 42, tandis que la bague radialement externe 114 du deuxième roulement 102 est au contact de la face 44.

La bague radialement interne 112 est configurée pour tourner avec le manchon 80 autour de l'axe X. La bague radialement externe 114 est configurée pour être fixe. Le premier et deuxième roulements 100, 102 permettent donc un assemblage durable du manchon 80, mobile en rotation autour de l'axe X, dans le carter 24, fixe.

Les premier et deuxième roulements 100, 102 sont par exemple des roulements à contact oblique.

Le premier élément de précontrainte 108 et le deuxième élément de précontrainte 110 ont une forme sensiblement annulaire comprenant une périphérie radialement interne 115 et une périphérie radialement externe 116.

La périphérie radialement interne 115 de chaque élément de précontrainte 108, 110 est disposée en regard de la paroi radialement externe 85 du manchon 80, un jeu radial 118 existant entre chaque élément de précontrainte 108 et le manchon 80.

La périphérie radialement externe 116 de chaque élément de précontrainte 108, 110 est disposée en regard de la paroi radialement interne 36 du carter 24. En particulier, comme indiqué précédemment, le premier élément de précontrainte 108 est relié au premier taraudage 47, tandis que le deuxième élément de précontrainte 110 est relié au deuxième taraudage 48. A cet effet, la périphérie radialement externe 116 de chaque élément de précontrainte comprend un filetage 119, 120 complémentaire des taraudages 47, 48. Les éléments de précontrainte 108, 110 étant visées au carter 24, ils peuvent être déplacés axialement, dans un sens de rapprochement ou d'éloignement des organes élastiques 104, 106 respectifs, afin d'ajuster l'effort de précontrainte dans chacun de ces organes élastiques 104, 106.

Afin de bloquer le déplacement axial des éléments de précontrainte 108, 110 dans le sens de rapprochement des organes élastiques 104, 105 respectivement, chaque élément de précontrainte 108, 110 peut comprendre une butée axiale complémentaire (non représentée) des butées axiales que la paroi 36 du carter peut comprendre.

Le premier organe élastique 104 est agencé dans la cavité 99 entre le premier roulement 100 et le premier élément de précontrainte 108. Le deuxième organe élastique 106 est agencé dans la cavité 99 entre le deuxième roulement 102 et le deuxième élément de précontrainte 110.

Les premier et deuxième organes élastiques 104, 106 sont par exemple des rondelles élastiques. Les rondelles 104, 106 comprennent chacune une périphérie radialement interne 121 disposée en regard de la paroi radialement externe 85 du manchon 80 et une périphérie radialement externe 122 disposée en regard de la paroi radialement interne 36 du carter 24.

Avantageusement, les rondelles 104, 106 ont une forme sensiblement tronconique. Comme il ressort des figures 2 et 3, la périphérie radialement interne 121 des rondelles 104, 106 vient en appui respectivement, du premier élément de précontrainte 108 et du deuxième élément de précontrainte 110. Ceci permet d'ajuster l'effort de précontrainte dans chacune des rondelles 104, 106 par déplacement axial des éléments de précontrainte 108, 110 respectifs.

La périphérie radialement externe 122 des rondelles 104, 106 vient en appui respectivement, de la bague externe du premier roulement 100 et de la bague externe du deuxième roulement 102.

L'effort de précontrainte de la première rondelle 104 évite que la rondelle 104 se déforme lorsque le dispositif 22 est soumis à un effort axial inférieur ou égal à un premier seuil. Lorsque l'effort axial auquel est soumis le dispositif 22 est supérieur au premier seuil, la rondelle 104 se comprime axialement. De manière analogue, l'effort de précontrainte de la deuxième rondelle 106 évite que la rondelle 106 se déforme lorsque le dispositif 22 est soumis à un effort axial inférieur ou égal à un deuxième seuil. Lorsque l'effort axial auquel est soumis le dispositif 22 est supérieur au deuxième seuil, la rondelle 106 se comprime axialement.

D'un point de vue cinématique, le dispositif 22 comprend un premier ensemble 200 et un second ensemble 300. Le premier ensemble 200 comprend les composants du dispositif 22 qui sont mobiles en rotation autour de l'axe X. Ainsi, pour le dispositif 22 des figures 2 et 3, le premier ensemble 200 comprend l'écrou 26, le manchon 80 et l'écrou de fermeture 96. Le second ensemble 300 comprend les composants du dispositif qui sont fixes. Dans le cas du dispositif 22 des figures 2 et 3, le second ensemble 300 comprend le carter 24, les éléments de précontrainte 108, 110 et les organes élastiques 104, 106.

Le premier et le second ensemble 200, 300 sont avantageusement coaxiaux.

Comme indiqué précédemment, le diamètre de la collerette 60 de l'écrou 26 est supérieur au diamètre de l'alésage 38 du carter 24, ce qui permet que la collerette 60 et l'extrémité 30 du carter 24 soient partiellement en vis-à-vis axial. Un premier jeu axial 201 est ainsi formé entre une partie 123 de la face 62 de la collerette 60 et une partie 125 de la première extrémité 30 du carter 24. Comme cela sera expliqué ci-après, la partie 123 de la face 62 constitue une butée axiale 123, tandis que la partie 125 de l'extrémité 30 du carter 24 constitue une butée axiale complémentaire 125. De préférence, une longueur axiale du premier jeu est égale ou inférieure à une valeur de la compression axiale subie par le deuxième organe élastique 106 lorsque l'effort axial auquel est soumis le dispositif 22 est supérieur au deuxième seuil.

Comme indiqué précédemment, le diamètre de la face de fermeture 101 est supérieur au diamètre de l'alésage 38 du carter 24, ce qui permet que la face de fermeture 101 et l'extrémité 32 du carter 24 soient partiellement en vis-à-vis axial. Un deuxième jeu axial 301 est ainsi formé entre une partie 127 de la face de fermeture 101 de l'écrou de fermeture 96 et une partie 129 de la deuxième extrémité 32 du carter 24. Comme cela sera expliqué ci-après, la partie 127 de la face de fermeture 101 constitue une butée axiale 127, tandis que la partie 129 de l'extrémité 32 du carter 24 constitue une butée axiale complémentaire 129. De préférence, une longueur axiale du deuxième jeu est égale ou inférieure à une valeur de la compression axiale subie par le premier organe élastique 104 lorsque l'effort axial auquel est soumis le dispositif 22 est supérieur au premier seuil.

Maintenant sera décrit un fonctionnement du dispositif 22 selon la forme de réalisation des figures 2 et 3.

En conditions normales de service, c'est-à-dire, lorsque le dispositif 22 n'est pas soumis à des efforts axiaux supérieurs aux premier ou deuxième seuils, le premier ensemble 200 est mobile en rotation par rapport au second ensemble 300 autour de l'axe X. En particulier, l'actionneur 20 entraine en rotation le premier ensemble 200 autour de l'axe X, tandis que le second ensemble 300 reste immobile. La rotation du premier ensemble 200 provoque la translation de la vis 28 selon la direction X, comme expliqué ci-avant. Ceci va provoquer le de la partie mobile du siège par rapport à la partie fixe de celui-ci.

Avantageusement, en conditions normales de service aucun déplacement axial du premier ensemble 200 par rapport au second ensemble 300 ne se produit. La longueur des jeux axiaux 201, 301 n'est donc pas modifiée.

Comme schématisé sur la figure 2 par la courbe en pointillés, lorsqu'un effort axial E1 supérieur au premier seuil est appliqué sur la vis 28 selon une direction dirigée vers l'écrou 26, l'effort E1 est transmis de la vis 28 à l'écrou 26 et au manchon 80. Ceci provoque un déplacement du premier ensemble 200 selon la direction de l'effort E1. Le déplacement du premier ensemble 200 provoque un déplacement solidaire de l'épaulement 92, ce qui provoque une transmission de l'effort axial E1 à la bague interne 112 du premier roulement 100, puis un déplacement de la bague externe 114 de ce roulement 100 dans la direction de l'effort E1. La bague externe 114 provoque alors une déformation, notamment une compression axiale, du premier organe élastique 104. L'effort E1 est ensuite transmis au premier élément de précontrainte 108 pour être finalement dissipé à travers le carter 24.

Comme indiqué précédemment, la longueur du jeu 301 est égale ou inférieure à la valeur de la compression axiale subie par l'organe élastique 104 en présence d'un effort axial ayant les caractéristiques de l'effort E1. Aussi, la compression de l'organe élastique 104 provoque la réduction de la longueur du jeu 301 jusqu'à ce que la butée axiale 127 du premier ensemble 200 vient en appui sur la butée axiale complémentaire 129 du second ensemble 300. Cet appui bloque d'une part le déplacement axial du premier ensemble 200 par rapport au second ensemble 300. D'autre part, la rotation autour de l'axe X du premier ensemble 200 est freinée à cause du frottement existant entre la butée axiale 127 et la butée axiale complémentaire 129.

La courbe en pointillés de la figure 3 schématise le chemin des forces dans le dispositif 22 lorsqu'un effort axial E2 supérieur au deuxième seuil est appliqué sur la vis 28 selon une direction dirigée vers l'écrou de fermeture 96. Dans ce cas, l'effort E2 est transmis de la vis 28 à l'écrou 26 et au manchon 80. Ceci provoque un déplacement du premier ensemble 200 selon la direction de l'effort E2. Le déplacement du premier ensemble 200 provoque un déplacement solidaire de l'épaulement 92, ce qui provoque une transmission de l'effort axial E2 à la bague interne 112 du deuxième roulement 102, puis un déplacement de la bague externe 114 de ce roulement 102 dans la direction de l'effort E2. La bague externe 114 provoque alors une déformation, notamment une compression axiale, du deuxième organe élastique 106. L'effort E2 est ensuite transmis au deuxième élément de précontrainte 110 pour être finalement dissipé à travers le carter 24.

Comme indiqué précédemment, la longueur du jeu 201 est égale ou inférieure à la valeur de la compression axiale subie par l'organe élastique 106 en présence d'un effort axial ayant les caractéristiques de l'effort E2. Aussi, la compression de l'organe élastique 104 provoque la réduction de la longueur du jeu 201 jusqu'à ce que la butée axiale 123 du premier ensemble 200 vient en appui sur la butée axiale complémentaire 125 du second ensemble 300. Cet appui bloque d'une part le déplacement axial du premier ensemble 200 par rapport au second ensemble 300. D'autre part, la rotation autour de l'axe X du premier ensemble 200 est freinée à cause du frottement existant entre la butée axiale 123 et la butée axiale complémentaire 125.

Les figures 4 et 5 montrent une deuxième forme de réalisation du dispositif 22. Sauf indication contraire, dans ce qui suit les composants qui portent les mêmes références que sur les figures 2 et 3 sont similaires ou identiques à ceux qui ont été décrits ci-avant et ils ne seront pas décrits de nouveau.

Dans cette forme de réalisation, le dispositif 22 comprend un carter 241, un écrou 261 et une vis 281.

Le carter 241 et la vis 281 sont similaires respectivement au carter 24 et à la vis 28 décrits ci-avant en référence aux figures 2 et 3. Par conséquent, ils ne seront pas décrits de nouveau. On précise toutefois que sur les figures 4 et 5, la première et deuxième butées qui bloquent le déplacement axial des éléments de précontrainte 108, 110 sont représentées. La première butée est référencée 243, tandis que la deuxième butée est référencée 245. Sur ces figures, les butées complémentaires prévues sur les éléments de précontrainte 108, 110 sont aussi visibles. La butée complémentaire de la butée 243 est référencée 247 et la butée complémentaire de la butée 245 est référencée 249.

L'écrou 261 diffère de l'écrou 26 en ce que la paroi radialement externe 54 ne comprend pas de collerette annulaire 60. Un filetage 272 est prévu sur la paroi radialement externe 54. Le filetage 272 est par exemple annulaire. Le filetage 272 est compris sur une partie d'extrémité 255 de la paroi radialement externe 54 qui comprend la première extrémité 50.

Comme il ressort clairement des figures 4 et 5, dans l'écrou 261, la première zone 68 de la paroi radialement interne 56 ne comprend pas de taraudage 72.

Le dispositif 22 comprend en outre un manchon 801 solidaire d'un écrou de fermeture 961.

L'écrou de fermeture 961 est similaire à l'écrou de fermeture 96 des figures 2 et 3. On précise toutefois que dans l'écrou de fermeture 961, la face de fermeture 101 a un diamètre inférieur au diamètre de l'alésage 38 traversant le carter 241. L'écrou de fermeture 961 peut donc être disposé à l'intérieur du carter 241.

Le manchon 801 comprend une enveloppe cylindrique 802 et une couronne 803.

L'enveloppe cylindrique 802 s'étend entre une première extrémité 804 et une deuxième extrémité 805 et comprend une paroi radialement externe 806 une paroi radialement interne 807. La paroi radialement interne 807 délimite un alésage 808 qui traverse l'enveloppe cylindrique 802 axialement entre la première extrémité 804 et la deuxième extrémité 805. L'alésage 808 est similaire à l'alésage 107 du manchon 80 du dispositif 22 des figures 2 et 3 et ne sera pas décrit de nouveau.

La paroi radialement externe 806 de l'enveloppe cylindrique 802 comprend une saillie radiale 809 sur une partie d'extrémité 810 comprenant la première extrémité 804.

La paroi radialement externe 806 de l'enveloppe cylindrique 802 comprend sur une partie d'extrémité 811 comprenant la deuxième extrémité 805 le filetage 88 décrit précédemment en référence aux figures 2 et 3. Le filetage 88 est complémentaire du taraudage 98 de l'écrou de fermeture 961.

La couronne 803 comprend une partie radiale 812 et une partie axiale 813. La partie radiale 812 s'étend radialement vers l'extérieur du manchon 801 entre la première extrémité 804 de l'enveloppe cylindrique 802 et la partie axiale 813. Un diamètre de la partie radiale 812 est donc supérieur au diamètre de l'alésage 808.

La partie axiale 813 s'étend axialement entre une extrémité solidaire de la partie radiale 812 et une extrémité libre.

Une paroi axialement interne 814 de la partie radiale 812 et une paroi radialement interne 815 de la partie axiale 813 délimitent un logement d'assemblage avec l'écrou 261. En particulier, la paroi radialement interne 815 de la partie axiale 813 comprend un taraudage 816 complémentaire du filetage 272 de la paroi radialement externe 54 de l'écrou 261.

Dans la forme de réalisation des figures 4 et 5, un seul roulement 900 est prévu dans le dispositif 22. Le roulement 900 comprend une bague radialement interne 112 et une bague radialement externe 114, telles que celles détaillées en référence aux figures 2 et 3. De préférence, le roulement 900 est un roulement à double rangée.

Le roulement 900 est disposé sur l'épaulement 40 du carter 241.

Une première entretoise 901 et une deuxième entretoise 902 annulaires sont reliées à l'enveloppe cylindrique 802. En particulier, les entretoises 901, 902 font saillie radialement depuis l'enveloppe cylindrique 802.

La première entretoise 901 est au contact de la saillie radiale 809 de l'enveloppe cylindrique 802. La deuxième entretoise 902 est au contact de l'écrou de fermeture 907.

Avantageusement, les entretoises 901, 902 sont agencées axialement de part et d'autre de la bague radialement interne 112 du roulement 900. Ceci permet de maintenir en position le roulement 900.

Les entretoises 901 et 902 étant reliées à l'enveloppe cylindrique, elles se déplacent solidairement avec le manchon 801.

Un premier plateau d'appui 904 et un deuxième plateau d'appui 905 sont disposés de part et d'autre de l'épaulement 42 du carter 241. Les plateaux d'appui 904, 905 sont donc agencés de part et d'autre du roulement 900. Avantageusement, lorsque aucun effort axial supérieur au premier seuil décrit précédemment n'agit sur le dispositif 22, le plateau d'appui 904 est en vis-à-vis radial de l'entretoise 901. De manière analogue, lorsque aucun effort axial supérieur au deuxième seuil décrit précédemment n'agit sur le dispositif 22, le plateau d'appui 905 est en vis-à-vis radial de l'entretoise 902.

Les plateaux d'appui 904, 905 sont interposés entre les rondelles 104, 106 et la bague radialement externe 114 du roulement 900. Ainsi, dans cette forme de réalisation, la périphérie radialement externe 122 des rondelles 104, 106 vient en appui axial sur, respectivement, le plateau d'appui 904 et le plateau d'appui 905. Les rondelles 104, 106 sont toutefois indirectement (à travers les plateaux d'appui 904, 905) en appui axial sur la bague radialement externe 814 du roulement.

Les plateaux d'appui 904, 905 sont par exemple annulaires. Une demi-section axiale des plateaux 904, 905 a avantageusement une forme de L inversé. Cette forme en L inversé permet de maintenir les plateaux d'appui 904, 905 en position en étant coincés entre le roulement 900 et la périphérie radialement externe 122 de respectivement, la rondelle 104 et la rondelle 106. Il n'est donc pas nécessaire de fixer les plateaux 904, 905 sur aucun composant du dispositif 22. Ainsi, le plateau d'appui 904 se déplace axialement lorsqu'un effort supérieur au premier seuil est appliqué sur le dispositif 22, et le plateau d'appui 905 se déplace axialement lorsqu'un effort supérieur au deuxième seuil est appliqué sur le dispositif 22, comme cela va être décrit ci-après.

Dans cette forme de réalisation, le premier ensemble 200 comprend l'écrou 261, le manchon 801, l'écrou de fermeture 907 et les entretoises 901, 902. Le second ensemble 300 comprend le carter 241, les éléments de précontrainte 108, 110 et les organes élastiques 104, 106. Par ailleurs, le premier jeu axial 201 existe entre la première entretoise 901 et le premier organe élastique 104, tandis que le deuxième jeu axial 301 existe entre la deuxième entretoise 902 et le deuxième organe élastique 106.

Maintenant sera décrit un fonctionnement du dispositif 22 selon la forme de réalisation des figures 2 et 3.

En conditions normales de service, le fonctionnement du dispositif 22 des figures 4 et 5 est identique à celui des figures 2 et 3.

Comme schématisé sur la figure 4 par la courbe en pointillés, lorsqu'un effort axial E3 supérieur au premier seuil est appliqué sur la vis 28 selon une direction dirigée vers l'écrou 261, l'effort E3 est transmis de la vis 28 à l'écrou 261 et au manchon 801. Ceci provoque un déplacement du premier ensemble 200 selon la direction de l'effort E3. L'entretoise 902 bute alors axialement contre la bague interne 112 du roulement 900 ce qui provoque une transmission de l'effort axial E3 à cette bague 112. L'effort E3 est transmis à la bague externe 114 du roulement 900, ce qui provoque le déplacement axial de la bague 114 dans la direction de l'effort E3. La bague 114 bute alors axialement contre le plateau d'appui 904 de sorte à l'entrainer en translation axiale selon la direction de l'effort E3. L'organe élastique 104 est alors comprimé axialement. L'effort E3 est ensuite transmis au premier élément de précontrainte 108 pour être finalement dissipé à travers le carter 241.

La compression de l'organe élastique 104 provoque la réduction de la longueur du deuxième jeu axial 201 jusqu'à ce que l'entretoise 901 vienne en appui sur l'organe élastique 104. Cet appui bloque d'une part le déplacement axial du premier ensemble 200 par rapport au second ensemble 300. D'autre part, la rotation autour de l'axe X du premier ensemble 200 est freiné à cause du frottement existant entre la butée axiale 127, correspondant à l'entretoise 901, et la butée axiale complémentaire 129, correspondant à l'organe élastique 104.

Comme schématisé sur la figure 5 par la courbe en pointillés, lorsqu'un effort axial E4 supérieur au deuxième seuil est appliqué sur la vis 28 selon une direction dirigée vers l'écrou de fermeture 907, l'effort E4 est transmis de la vis 28 à l'écrou 261 et au manchon 801. Ceci provoque un déplacement du premier ensemble 200 selon la direction de l'effort E4. L'entretoise 901 bute alors contre la bague interne 112 du roulement 900 ce qui provoque une transmission de l'effort axial E4 à cette bague 112. L'effort E4 est transmis à la bague externe 114 du roulement 900, ce qui provoque le déplacement axial de la bague 114 dans la direction de l'effort E4. La bague 114 bute alors axialement contre le plateau d'appui 905 de sorte à l'entrainer en translation axiale selon la direction de l'effort E4. L'organe élastique 106 est alors comprimé axialement. L'effort E4 est ensuite transmis au deuxième élément de précontrainte 110 pour être finalement dissipé à travers le carter 241.

La compression de l'organe élastique 106 provoque la réduction de la longueur du deuxième jeu axial 301 jusqu'à ce que l'entretoise 902 vienne en appui sur l'organe élastique 106. Cet appui bloque d'une part le déplacement axial du premier ensemble 200 par rapport au second ensemble 300. D'autre part, la rotation autour de l'axe X du premier ensemble 200 est freinée à cause du frottement existant entre la butée axiale 173, correspondant à l'entretoise 902, et la butée axiale complémentaire 129, correspondant à l'organe élastique 106.

On note que, dans certains cas, pour que le dispositif de transmission 22 s'active en cas de surcharge (c'est-à-dire, lorsque l'effort axial exercé sur le dispositif 22 est supérieur au premier ou au deuxième seuil) ; la rotation de l'écrou 26, 261 est bloquée avec un couple suffisant. A cet effet, le dispositif de transmission 22, et notamment l'écrou 26, 261, peut être relié à un élément permettant le freinage de l'écrou. Par exemple, l'écrou peut être relié à, entre autres, un frein à friction ou à un moteur avec un couple de crantage (aussi appelé couple d'encochage) élevé. Selon une définition admise par la commission électrotechnique internationale (CEI) le couple de crantage est le couple cyclique d'un moteur électrique à aimant permanent résultant de la tendance du rotor et du stator du moteur à s'aligner dans une position correspondante à la réluctance magnétique minimale.

L'élément permettant le freinage de l'écrou 26, 261 peut par exemple être compris dans le train réducteur décrit précédemment.

## Revendications

1. Dispositif (22) de transmission d'un mouvement, le dispositif comportant :
- une vis (28, 281) s'étendant selon un axe (X) ;
- un écrou (26, 261) coopérant avec la vis ;
- un carter (24, 241) ;
- un premier organe élastique (104) ;
- un deuxième organe élastique (106) ;
- un premier ensemble (200) comportant ledit écrou ;
- un second ensemble (300) comportant ledit carter ;
- une première butée axiale (127) solidaire axialement du premier ensemble et apte à coopérer avec une première butée axiale (129) complémentaire du second ensemble, un premier jeu axial (301) étant formé entre la première butée axiale (127) et la première butée axiale complémentaire (129) ; et
- une deuxième butée axiale (123) solidaire axialement du premier ensemble et apte à coopérer avec une deuxième butée axiale complémentaire (125) du second ensemble, un deuxième jeu axial (201) étant formé entre la deuxième butée axiale (123) et la deuxième butée axiale complémentaire (125) ;
le premier organe élastique (104) étant apte à être déformé indépendamment du deuxième organe élastique (106) sous l'effet d'un premier effort axial (E1, E3) orienté selon une première direction et exercé par le premier ensemble (200) sur le premier organe élastique (104), de façon à réduire le premier jeu axial (301), la première butée axiale (127) étant apte à venir en appui sur la première butée axiale complémentaire (129) lorsque ledit premier effort axial (E1, E3) dépasse un premier seuil,
le deuxième organe élastique (106) étant apte à être déformé indépendamment du premier organe élastique (104) sous l'effet d'un deuxième effort axial (E2, E4) orienté selon une deuxième direction opposée à la première direction et exercé par le premier ensemble (200) sur le deuxième organe élastique (106), de façon à réduire le deuxième jeu axial (201), la deuxième butée axiale (123) étant apte à venir en appui sur la deuxième butée axiale (125) complémentaire lorsque ledit deuxième effort axial (E2, E4) dépasse un deuxième seuil.

2. Dispositif (22) selon la revendication précédente, comprenant en outre un premier élément de précontrainte (108) et un deuxième élément de précontrainte (110), le premier élément de précontrainte étant apte à régler un effort de précontrainte agissant sur le premier organe élastique (104) indépendamment d'un effort de précontrainte agissant sur le deuxième organe élastique (106), le deuxième élément de précontrainte étant apte à régler l'effort de précontrainte agissant sur le deuxième organe élastique (106) indépendamment de l'effort de précontrainte agissant sur le premier organe élastique (104).

3. Dispositif (22) selon la revendication précédente, comportant au moins un roulement (100, 102, 900) comprenant une bague radialement interne (112) disposée en regard du premier ensemble (200) et une bague radialement externe (114) disposée en regard du second ensemble (300), une périphérie radialement externe (122) de chaque organe élastique (104, 106) venant en appui axialement directement ou indirectement sur la bague radialement externe (114) dudit roulement, et une périphérie radialement interne (121) venant en appui axialement sur l'élément de précontrainte (108, 110).

4. Dispositif (22) selon l'une des revendications précédentes, dans lequel le second ensemble (300) comprend un épaulement (40) s'étendant radialement depuis une paroi radialement interne (36) du carter (24, 241), dans lequel le premier organe élastique (104) est agencé d'un premier côté de l'épaulement (40) du second ensemble (300) et le deuxième organe élastique (106) est agencé d'un second côté de l'épaulement (40) du second ensemble (300) opposé au premier côté.

5. Dispositif (22) selon les revendications 3 et 4, dans lequel un premier roulement (100) est agencé entre le premier organe élastique (104) et le premier côté de l'épaulement (40) du second ensemble (300), et dans lequel un deuxième roulement (102) est agencé entre le deuxième organe élastique (106) et le second côté de l'épaulement (40) du second ensemble (300), dans lequel la périphérie radialement externe (122) du premier organe élastique (104) vient en appui axial sur la bague radialement externe (114) du premier roulement (100), la périphérie radialement externe (122) du deuxième organe élastique (106) venant en appui axial sur la bague radialement externe (114) du deuxième roulement (102).

6. Dispositif (22) selon l'une des revendications 4 ou 5, dans lequel le premier ensemble (200) comprend un épaulement (92) s'étendant radialement depuis une paroi radialement externe (85) du premier ensemble (200), l'épaulement (92) du premier ensemble (200) étant disposé en vis-à-vis radial de l'épaulement (40) du second ensemble (300).

7. Dispositif (22) selon la revendication précédente, dans lequel l'épaulement (92) du premier ensemble (200) a une longueur selon la direction axiale inférieure à une longueur selon ladite direction axiale de l'épaulement (40) du second ensemble (300).

8. Dispositif (22) selon la revendication 4, dans lequel un roulement (900) est agencé radialement à l'intérieur de l'épaulement (40) du second ensemble (300).

9. Dispositif (22) selon la revendication 5 et la revendication 8, comprenant en outre un premier plateau d'appui (904) annulaire agencé entre la bague radialement externe (114) du roulement (900) et la périphérie radialement externe (122) du premier organe élastique (104), et un deuxième plateau d'appui (905) annulaire agencé entre la bague radialement externe (114) du roulement (900) et la périphérie radialement externe (122) du deuxième organe élastique (106), la périphérie radialement externe (122) du premier organe élastique (104) venant en appui contre le premier plateau d'appui (904), la périphérie radialement externe (122) du deuxième organe élastique (106) venant en appui contre le deuxième plateau d'appui (905).

10. Siège (2) pour aéronef, comportant une partie fixe destinée à être fixée à une partie fixe de l'aéronef et une partie mobile apte à être déplacée par rapport à la partie fixe, un dispositif (22) de transmission d'un mouvement selon l'une des revendications précédentes étant monté entre la partie mobile et la partie fixe, l'écrou (26, 261) du dispositif de transmission du mouvement étant apte à être entrainé en rotation par un actionneur (20), la vis (28, 281) étant reliée à ladite partie mobile du siège (2), le carter (24, 241) étant relié à ladite partie fixe du siège (2).

## Patentansprüche

1. Vorrichtung (22) zur Übertragung einer Bewegung, wobei die Vorrichtung umfasst:
- eine Schraube (28, 281), die sich entlang einer Achse (X) erstreckt;
- eine mit der Schraube zusammenwirkende Mutter (26, 261);
- ein Gehäuse (24, 241);
- ein erstes elastisches Element (104);
- ein zweites elastisches Element (106);
- eine erste Baugruppe (200), die die Mutter umfasst;
- eine zweite Baugruppe (300), die das Gehäuse umfasst;
- einen ersten axialen Anschlag (127), der axial fest mit der ersten Baugruppe verbunden ist und mit einem ersten axialen Gegenanschlag (129) der zweiten Baugruppe zusammenwirken kann, wobei zwischen dem ersten axialen Anschlag (127) und dem ersten axialen Gegenanschlag (129) ein erstes axiales Spiel (301) besteht; und
- einen zweiten axialen Anschlag (123), der axial fest mit der ersten Baugruppe verbunden ist und mit einem zweiten axialen Gegenanschlag (125) der zweiten Baugruppe zusammenwirken kann, wobei zwischen dem zweiten axialen Anschlag (123) und dem zweiten axialen Gegenanschlag (125) ein zweites axiales Spiel (201) besteht;
wobei das erste elastische Element (104) in der Lage ist, unabhängig von dem zweiten elastischen Element (106) unter der Wirkung einer ersten Axialkraft (E1, E3) verformt zu werden, die in einer ersten Richtung ausgerichtet ist und von der ersten Baugruppe (200) auf das erste elastische Element (104) ausgeübt wird, um das erste axiale Spiel (301) zu verringern, wobei der erste axiale Anschlag (127) in Anlage an den ersten axialen Gegenanschlag (129) gelangen kann, wenn die genannte erste Axialkraft (E1, E3) einen ersten Schwellenwert überschreitet,
wobei das zweite elastische Element (106) in der Lage ist, unabhängig von dem ersten elastischen Element (104) unter der Wirkung einer zweiten Axialkraft (E2, E4) verformt zu werden, die in einer zweiten Richtung entgegengesetzt zur ersten Richtung ausgerichtet ist und von der ersten Baugruppe (200) auf das zweite elastische Element (106) ausgeübt wird, um das zweite axiale Spiel (201) zu verringern, wobei der zweite axiale Anschlag (123) in Anlage an den zweiten axialen Gegenanschlag (125) gelangen kann, wenn die zweite Axialkraft (E2, E4) einen zweiten Schwellenwert überschreitet.

2. Vorrichtung (22) nach dem vorstehenden Anspruch, ferner umfassend ein erstes Vorspannelement (108) und ein zweites Vorspannelement (110), wobei das erste Vorspannelement in der Lage ist, eine auf das erste elastische Element (104) wirkende Vorspannkraft unabhängig von einer auf das zweite elastische Element (106) wirkenden Vorspannkraft einzustellen, wobei das zweite Vorspannelement in der Lage ist, die auf das zweite elastische Element (106) wirkende Vorspannkraft unabhängig von der auf das erste elastische Element (104) wirkenden Vorspannkraft einzustellen.

3. Vorrichtung (22) nach dem vorstehenden Anspruch, umfassend zumindest ein Wälzlager (100, 102, 900), das einen der ersten Baugruppe (200) gegenüberliegend angeordneten radial inneren Ring (112) und einen der der zweiten Baugruppe (300) gegenüberliegend angeordneten radial äußeren Ring (114) umfasst, wobei ein radial äußerer Umfang (122) jedes elastischen Elements (104, 106) axial direkt oder indirekt in Anlage an den radial äußeren Ring (114) des genannten Wälzlagers gelangt, und ein radial innerer Umfang (121) axial in Anlage an das Vorspannelement (108, 110) gelangt.

4. Vorrichtung (22) nach einem der vorstehenden Ansprüche,
wobei die zweite Baugruppe (300) eine Schulter (40) umfasst, die sich radial von einer radial inneren Wand (36) des Gehäuses (24, 241) ausgehend erstreckt, wobei das erste elastische Element (104) auf einer ersten Seite der Schulter (40) der zweiten Baugruppe (300) angeordnet ist und das zweite elastische Element (106) auf einer zweiten Seite der Schulter (40) der zweiten Baugruppe (300) angeordnet ist, die der ersten Seite entgegengesetzt ist.

5. Vorrichtung (22) nach den Ansprüchen 3 und 4,
wobei zwischen dem ersten elastischen Element (104) und der ersten Seite der Schulter (40) der zweiten Baugruppe (300) ein erstes Wälzlager (100) angeordnet ist und wobei zwischen dem zweiten elastischen Element (106) und der zweiten Seite der Schulter (40) der zweiten Baugruppe (300) ein zweites Wälzlager (102) angeordnet ist, wobei der radial äußere Umfang (122) des ersten elastischen Elements (104) axial in Anlage an den radial äußeren Ring (114) des ersten Wälzlagers (100) gelangt, wobei der radial äußere Umfang (122) des zweiten elastischen Elements (106) axial in Anlage an den radial äußeren Ring (114) des zweiten Wälzlagers (102) gelangt.

6. Vorrichtung (22) nach einem der Ansprüche 4 oder 5,
wobei die erste Baugruppe (200) eine Schulter (92) umfasst, die sich radial von einer radial äußeren Wand (85) der ersten Baugruppe (200) ausgehend erstreckt, wobei die Schulter (92) der ersten Baugruppe (200) der Schulter (40) der zweiten Baugruppe (300) radial gegenüberliegend angeordnet ist.

7. Vorrichtung (22) nach dem vorstehenden Anspruch,
wobei die Schulter (92) der ersten Baugruppe (200) eine Länge in axialer Richtung aufweist, die kleiner ist als eine Länge der Schulter (40) der zweiten Baugruppe (300) in dieser axialen Richtung.

8. Vorrichtung (22) nach Anspruch 4,
wobei radial innerhalb der Schulter (40) der zweiten Baugruppe (300) ein Wälzlager (900) angeordnet ist.

9. Vorrichtung (22) nach Anspruch 5 und Anspruch 8, ferner umfassend eine erste ringförmige Stützplatte (904), die zwischen dem radial äußeren Ring (114) des Wälzlagers (900) und dem radial äußeren Umfang (122) des ersten elastischen Elements (104) angeordnet ist, sowie eine zweite ringförmige Stützplatte (905), die zwischen dem radial äußeren Ring (114) des Wälzlagers (900) und dem radial äußeren Umfang (122) des zweiten elastischen Elements (106) angeordnet ist, wobei der radial äußere Umfang (122) des ersten elastischen Elements (104) in Anlage an die erste Stützplatte (904) gelangt und der radial äußere Umfang (122) des zweiten elastischen Elements (106) in Anlage an die zweite Stützplatte (905) gelangt.

10. Sitz (2) für ein Luftfahrzeug, umfassend einen feststehenden Abschnitt, der zur Befestigung an einen feststehenden Abschnitt des Luftfahrzeugs bestimmt ist, sowie einen beweglichen Abschnitt, der relativ zu dem feststehenden Abschnitt verschoben werden kann, wobei zwischen dem beweglichen Abschnitt und dem feststehenden Abschnitt eine Vorrichtung (22) zur Übertragung einer Bewegung gemäß einem der vorstehenden Ansprüche angeordnet ist, wobei die Mutter (26, 261) der Vorrichtung zur Übertragung der Bewegung mittels eines Aktuators (20) in Drehung versetzt werden kann, wobei die Schraube (28, 281) mit dem beweglichen Abschnitt des Sitzes (2) verbunden ist und das Gehäuse (24, 241) mit dem feststehenden Abschnitt des Sitzes (2) verbunden ist.

## Claims

1. A device (22) for transmitting a movement, the device comprising:
- a screw (28, 281) extending along an axis (X);
- a nut (26, 261) cooperating with the screw;
- a housing (24, 241);
- a first elastic member (104);
- a second elastic member (106);
- a first assembly (200) comprising the nut;
- a second assembly (300) comprising the housing;
- a first axial stop (127) axially integral with the first assembly and capable of cooperating with a complementary first axial stop (129) of the second assembly, a first axial clearance (301) being formed between the first axial stop (127) and the complementary first axial stop (129); and
- a second axial stop (123) axially integral with the first assembly and capable of cooperating with a complementary second axial stop (125) of the second assembly, a second axial clearance (201) being formed between the second axial stop (123) and the complementary second axial stop (125);
the first elastic member (104) being capable of deformation independently of the second elastic member (106), under the effect of a first axial force (E1, E3) oriented along a first direction and exerted by the first assembly (200) on the first elastic member (104) so as to reduce the first axial clearance (301), the first axial stop (127) being capable of bearing against the complementary first axial stop (129) when the first axial force (E1, E3) exceeds a first threshold,
the second elastic member (106) being capable of deformation independently of the first elastic member (104) under the effect of a second axial force (E2, E4) oriented along a second direction that is opposite to the first direction and exerted by the first assembly (200) on the second elastic member (106) so as to reduce the second axial clearance (201), the second axial stop (123) being capable of bearing against the complementary second axial stop (125) when the second axial force (E2, E4) exceeds a second threshold.

2. Device (22) according to the preceding claim, further comprising a first prestressing element (108) and a second prestressing element (110), the first prestressing element being capable of regulating a prestressing force acting on the first elastic member (104) independently of a prestressing force acting on the second elastic member (106), the second prestressing element being capable of regulating the prestressing force acting on the second elastic member (106) independently of the prestressing force acting on the first elastic member (104).

3. Device (22) according to the preceding claim, comprising at least one bearing (100, 102, 900) comprising a radially inner ring (112) arranged facing the first assembly (200) and a radially outer ring (114) arranged facing the second assembly (300), a radially outer periphery (122) of each elastic member (104, 106) bearing axially, directly or indirectly, on the radially outer ring (114) of the bearing, and a radially inner periphery (121) bearing axially on the prestressing element (108, 110).

4. Device (22) according to one of the preceding claims, wherein the second assembly (300) comprises a shoulder (40) extending radially from a radially inner wall (36) of the housing (24, 241), wherein the first elastic member (104) is arranged on a first side of the shoulder (40) of the second assembly (300) and the second elastic member (106) is arranged on a second side of the shoulder (40) of the second assembly (300), opposite the first side.

5. Device (22) according to claims 3 and 4, wherein a first bearing (100) is arranged between the first elastic member (104) and the first side of the shoulder (40) of the second assembly (300), and wherein a second bearing (102) is arranged between the second elastic member (106) and the second side of the shoulder (40) of the second assembly (300), wherein the radially outer periphery (122) of the first elastic member (104) bears axially against the radially outer ring (114) of the first bearing (100), and the radially outer periphery (122) of the second elastic member (106) bears axially against the radially outer ring (114) of the second bearing (102).

6. Device (22) according to one of claims 4 or 5, wherein the first assembly (200) comprises a shoulder (92) extending radially from a radially outer wall (85) of the first assembly (200), the shoulder (92) of the first assembly (200) being arranged radially facing the shoulder (40) of the second assembly (300).

7. Device (22) according to the preceding claim, wherein the shoulder (92) of the first assembly (200) has a length along the axial direction that is less than the length of the shoulder (40) of the second assembly (300) along the axial direction.

8. Device (22) according to claim 4, wherein a bearing (900) is arranged radially inside the shoulder (40) of the second assembly (300).

9. Device (22) according to claim 5 and claim 8, further comprising a first annular support plate (904) arranged between the radially outer ring (114) of the bearing (900) and the radially outer periphery (122) of the first elastic member (104), and a second annular support plate (905) arranged between the radially outer ring (114) of the bearing (900) and the radially outer periphery (122) of the second elastic member (106), the radially outer periphery (122) of the first elastic member (104) bearing against the first support plate (904), and the radially outer periphery (122) of the second elastic member (106) bearing against the second support plate (905).

10. A seat (2) for an aircraft, comprising a fixed portion intended to be attached to a fixed portion of the aircraft and a movable portion capable of being moved relative to the fixed portion, a device (22) for transmitting a movement according to one of the preceding claims being mounted between the movable portion and the fixed portion, the nut (26, 261) of the device for transmitting the movement being rotatable by an actuator (20), the screw (28, 281) being connected to the movable portion of the seat (2), and the housing (24, 241) being connected to the fixed portion of the seat (2).
